# EUROPEAN PATENT SPECIFICATION

(11) **EP 3 002 151 B1**
(45) Date of publication and mention of the grant of the patent: **20.12.2017**
(21) Application number: 15188170.3
(22) Date of filing: 02.10.2015
(51) Int. Cl.: B60M 1/18, B60M 1/30, H02G 1/04

(54) **ISOLATING MECHANICAL CONNECTOR FOR OVERHEAD ELECTRICAL POWER LINE, AND METHOD FOR PROVIDING THE CONNECTOR IN AN OVERHEAD ELECTRICAL POWER LINE**
ISOLIERUNG EINES MECHANISCHEN VERBINDERS FÜR HOCHSPANNUNGSLEITUNGEN UND VERFAHREN ZUR BEREITSTELLUNG DES VERBINDERS IN EINER HOCHSPANNUNGSLEITUNG
ISOLATION D'UN CONNECTEUR MÉCANIQUE POUR LIGNE DE PUISSANCE ÉLECTRIQUE AÉRIENNE ET PROCÉDÉ POUR INSÉRER LE CONNECTEUR DANS UNE LIGNE ÉLECTRIQUE AÉRIENNE

(30) Priority: 02.10.2014 NL 2013558
(43) Date of publication of application: 06.04.2016
(73) Proprietor: Conductis B.V., 3065 LG Rotterdam (NL)
(72) Inventor: VAN BEKKUM, Mark Peter, 2624 KM Delft (NL); KOUWENHOVEN, Jacobus Leo Marie, 2564 TL Den Haag (NL)
(74) Representative: EP&C

(56) References cited:
- EP-A1- 0 646 488
- CN-A- 101 531 148
- CN-Y- 201 245 083
- DE-A1- 3 305 723
- JP-A- 2002 240 597

## Description

### FIELD OF THE INVENTION

The invention relates to the field of powering electrical vehicles, such as railway vehicles and electrical buses, through an overhead electrical power line. More specifically, the invention relates to an isolating mechanical connector for connecting sections of an overhead electrical power line. Furthermore, the invention relates to a method for providing the connector in an overhead electrical power line.

### BACKGROUND OF THE INVENTION

In the field of overhead electrical power lines for the supply of electrical power to a vehicle for the propulsion thereof, it is important to provide an essentially mechanically continuous line or wire along which a pantograph mounted on the vehicle may move to collect current.

Different sections of the power line, which different sections are isolated relative to each other, may be electrically connected to different power stations which may provide different voltages to the different sections.

A known electrically isolating, mechanically connecting connector (which may also be referred to as separator) comprises a first clamping part configured for clamping an end of a first section of the power line, and a second clamping part configured for clamping an adjacent end of a second section of the power line. The first clamping part is mechanically connected to the second clamping part through a bar which has a first end configured to be connected to the first clamping part, and an opposite second end configured to be connected to the second clamping part, wherein part of the bar between the first end and the second end is configured to electrically isolate the first end from the second end. The bar has a considerable length, and as a result there is a considerable gap between the end of the first section and the end of the second section when the connector is mounted in the power line. To allow the pantograph to cross this gap smoothly, the connector further comprises mechanical guides extending from the first and second clamping parts, respectively, and arranged laterally from the gap at a similar horizontal level to mechanically support the pantograph along the length of the gap.

The known isolating connector has some disadvantages.

A first disadvantage is the large number of components of the known isolating connector. Manufacturing these components, each requiring a high quality to be able to withstand the operational stresses and environmental influences, is expensive. In addition, mounting the connector between sections of a power line requires a relatively long time of specialist service engineers, making the operation of mounting the connector expensive. Moreover, the power line is out of service during this time which may cause inconvenience and further costs or loss of income.

A second disadvantage is the relatively wide gap between the ends of the adjacent sections, which necessitates the provision of the mechanical guides alongside the gap. Such guide structure increases manufacturing and mounting costs.

A third disadvantage is found in the mounting process, wherein an existing continuous power line to be divided into sections first of all is cut at the location where the isolating connector is to be mounted, to provide an end of a first section of the power line, and an adjacent end of a second section of the power line. To allow such cutting, the power line has been earthed and relieved from mechanical tension beforehand. Then, with the ends of the sections hanging loose, part of one of the sections is removed to provide said gap between the sections, a first clamping part is mounted to the end of the first section, and a second clamping part is mounted to the end of the second section. Next, the isolating bar is connected between the first and second clamping parts. Finally, the power line is suspended and tensioned again as required, with the isolating connector inserted inline. When the mechanical mounting operations are finished, the power line can be put into service by electrically powering it. Thus, many steps have been taken to mount the isolating connector in the power line, requiring the track which is supplied by the power line to be taken out of service for a relatively long time.

DE 3305723 A1 discloses a separator for overhead power lines for electric railways comprising two clamping bodies mechanically interconnected by at least one isolating strip.

### SUMMARY OF THE INVENTION

It would be desirable to provide an isolating connector that comprises relatively few parts. It would also be desirable to provide an isolating connector that is relatively inexpensive. It would further be desirable to provide an isolating connector that can be mounted easily. It would still further be desirable to provide an isolating connector that can be mounted in a relatively short time.

To better address one or more of these concerns, in a first aspect of the invention an isolating mechanical connector for connecting sections of an overhead electrical power line, in particular an end of a first section to an adjacent end of a second section, is provided in accordance with claim 1.

The invention provides a single connector device with a low number of components. The connector can be mounted with little effort and time, and consequently with low costs, in an existing, even mechanically tensioned, electrical power line to create a first section of the electrical power line isolated from a second adjacent section of the electrical power line.

An advantage of the use of plate material is that manufacturing of the first and second clamping members may be fast and cheap. Furthermore, the plate shape provides flat surfaces which can support the securing means and other components or parts of the connector.

The plates of the first and second clamping members are made at least partially from electrically isolating material. Preferably, the plates are made entirely from electrically isolating material.

The plates provide a structural strength for the connection to be made by the connector, taking up tension forces exerted by the sections of the electrical power line after an interruption in the electrical power line has been made. At the same time, the plates electrically isolate the sections relative to each other. Furthermore, the plates made from electrically isolating material are relatively lightweight so as to have little effect on the straightness of the suspended electrical power line.

The first and second pressure parts, which may be identical, may form the first and second clamping areas, respectively, by having a profile corresponding to, or fitting to, a profile provided on the electrical power line. The electrical power line may e.g. be provided with longitudinal, generally V-shaped slots at opposing sides, and in such case the first and second pressure parts comprise elongated, generally V-shaped ribs engaging the electrical power line slots.

The pressure parts may be manufactured as separate from the remainder of the first and second clamping members, or may be integral parts of the first and second clamping members.

In a second aspect of the present invention relating to a mounting process of a connector according to the present invention, a method of providing sections of an overhead electrical power line isolated from each other is provided. The method comprises the steps of: selecting a location on an existing electrical power line where to provide an isolation between sections of the electrical power line; mounting the connector of the invention on the existing electrical power line, wherein the first clamping areas and the second clamping areas clamp the electrical power line; and removing part of the electrical power line in the separation region.

An advantage of the connector and the associated method of mounting the connector is that there is no need to remove the mechanical tension in an existing overhead electrical power line in the installation process of the connector (earthing of the electrical power line is, of course, obligatory for safety reasons). By mounting the connector on the electrical power line, a part of the electrical power line in the separation region of the connector is mechanically bridged. When subsequently said part of the electrical power line is removed, such as by cutting, sawing, grinding or abrasive action, the connector maintains the mechanical tension in the electrical power line, and at the same time electrically isolates first and second sections of the electrical power line created by removing said part of the electrical power line. Said part has dimensions, in particular a length of line, sufficiently large to ensure and maintain an electrical isolation, in air, which is sufficient in all operational conditions of the electrical power line. In this respect, the adjacent ends of the first and second sections of the electrical power line may be rounded off to avoid local concentration of electrical field strength in air which could lead to local discharge effects.

In an embodiment of the connector, the first clamping member and the second clamping member each are provided with an opening providing access to the separation region, to facilitate use of a tool providing an interruption in, e.g. a removal of part of, the electrical power line.

In case of manufacturing the first and second clamping members as plates, in an embodiment of the connector the opening of each one of the first and second clamping members is a recess extending from a side of the plate.

The plates are generally arranged parallel to each other to have the first and second clamping areas, and also the first and second clamping regions, generally between the plates. Accordingly, at least part of the separation region may also be between the plates. With the recesses aligned to each other (when seen perpendicular to the plates), free access to the separation region can be provided.

In an embodiment of the connector, the first and second pressure parts are made from metal, in particular a copper alloy.

The pressure parts contact the electrical power line, and in this contact need to develop sufficient friction to withstand the shearing forces exerted by the mechanical tension in the electrical power line sections. Metal pressure parts may perform such function reliably. In a preferred embodiment, the pressure parts are made from a copper alloy, more preferably from the same or similar alloy as the electrical power line, in order to reduce or avoid corrosion at the interface of the electrical power line and the pressure parts.

In an embodiment of the connector, the securing means comprise at least partially threaded elements, bolts and/or nuts to connect the first and second clamping members to each other.

An advantage of using threaded elements, bolts and/or nuts is that clamping forces can be exerted by the securing means optimally distributed over the first and second clamping members by selecting the number of threaded elements and/or bolts and the location thereof.

In an embodiment of the connector, the clamping members each comprise suspension means.

The suspension means, which can e.g. be embodied as holes in the first and/or second clamping members, or as hook members (possibly removably) attached to the first and/or second clamping members, allow the connector to be positioned before and during its mounting in the electrical power line, thereby facilitating the mounting.

These and other aspects of the invention will be more readily appreciated as the same becomes better understood by reference to the following detailed description and considered in connection with the accompanying drawings in which like reference symbols designate like parts.

### BRIEF DESCRIPTION OF THE DRAWINGS

Figure 1 depicts a side view of an embodiment of a connector of the present invention, mounted on sections of an electrical power line.
Figure 2 depicts, on a larger scale, another side view of the embodiment of the connector of Figure 1, as seen in a cross-section of the electrical power line along line II-II as indicated in Figure 1.
Figure 3 depicts a perspective view of another embodiment of a connector of the present invention.
Figure 4 depicts a side view of the embodiment of the connector of Figure 3, as seen in the direction of arrow IV as indicated in Figure 3.
Figure 5 depicts a top view of the embodiment of the connector of Figure 3.
Figure 6 depicts a bottom view of the embodiment of the connector of Figure 3.

### DETAILED DESCRIPTION OF EMBODIMENTS

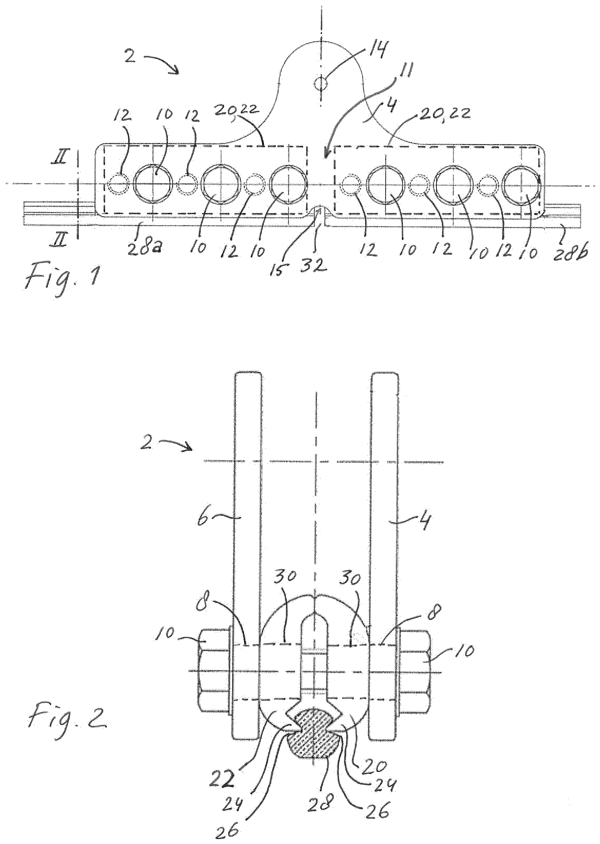

Figures 1 and 2 depict a clamping device 2 comprising a first clamping member embodied as a plate 4 and a second clamping member embodied as a plate 6. The plates 4, 6 can be manufactured identical to each other. The plates 4, 6 may be made at least partially from electrically isolating material. Each plate 4, 6 comprises six through holes 8 each to allow passage of a bolt 10, and six threaded holes 12 for securing the bolts 10. Accordingly, the clamping device 2 is securable by twelve bolts. The bolts 10 may be electrically isolated from the plates 4, 6. The threaded holes 12 may be replaced by through holes, and nuts may be provided on the ends of the bolts 10 to secure the clamping device 2. Instead of bolts 10, at least partially threaded elements and nuts may be used to secure the clamping device 2.

Each plate 4, 6 comprises a suspension means embodied as a hole 14, from which the plate 4, 6 can be suspended, e.g. during mounting thereof.

Each plate 4, 6 further comprises a recess 15. The recesses 15 of the respective plates 4, 6 are aligned or overlapping, as viewed perpendicular to the plane of the drawing of Figure 1.

As illustrated in Figure 2, the clamping device 2 further comprises pressure parts 20, 22 each having generally V-shaped ribs 24 engaging generally V-shaped slots 26 provided along an electrical power line 28. The pressure parts 20, 22 each form a clamping area defined by their ribs 24, and a clamping region between the opposite ribs 24.

Referring to Figure 1, pressure parts 20, 22 (indicated by dashed lines), clamping electrical power line sections 28a, 28b, respectively, by the bolts 10 extending through holes 30 in the pressure parts 20, 22, hold the electrical power line sections 28a, 28b through friction against shearing forces exerted by mechanical tension in the electrical power line sections 28a, 28b. Each pressure part 20, 22 extends over less than half the length of the plates 4, 6, and performs its clamping action through six bolts pressing the pressure parts 20, 22 with their ribs 24 in the slots 26 of the electrical power line sections 28a, 28b. Thus, pressure parts 20, 22 at a left-hand side of the clamping device 2 (as depicted in Figure 1) form a first clamping region, whereas pressure parts 20, 22 at a right-hand side of the clamping device (as depicted in Figure 1) form a second clamping region. The first and second clamping regions are spaced from each other. A separation region 11 is formed between the first and second clamping regions.

The bolts 10 may be electrically isolated from the pressure parts 20, 22, e.g. by arranging sleeves made from an isolating material between the bolts 10 and the pressure parts 20, 22.

The electrical power line section 28a is electrically isolated from the electrical power line section 28b by virtue of (a) the electrically isolating material of the plates 4, 6, and (b) an air gap 32 in the separation region 11 between the electrical power line sections 28a, 28b. As an example, in a DC power system having a nominal system voltage of 750 V, a voltage difference between different power line sections 28a, 28b may be 40 V maximum. A width of the gap 32 is to be adapted to such voltages, and for other voltages, other dimensional characteristics apply. As long as the width of the gap 32 remains below a predetermined maximum, a pantograph of an electrically powered vehicle will be able to smoothly pass the gap 32 without damage or excessive wear.

Access to the separation region of the clamping device 2 is provided, inter alia, through the recesses 15 of the plates 4, 6. This is particularly useful when mounting the isolating mechanical connector on an overhead electrical power line, as explained below.

On a continuous, existing electrical power line, a location is selected where to provide an isolation between sections (to be created) of the electrical power line. Then, on the continuous electrical power line, the connector of the invention is fully mounted, that is, including tensioning the bolts 10 to clamp the electrical power line between pressure parts 20, 22. Then, with the recesses 15 providing access to a separation region of the connector, a part of the electrical power line may be removed to provide a gap 32. With the latter action, a first section 28a and a second section 28b of the electrical power line is created.

The removal of part of the electrical power line may be performed by sawing, cutting, grinding, and the like. The opposing ends of the sections 28a, 28b may be finished by smoothing and/or rounding off to reduce or avoid adverse electrical effects due to the voltage of the sections 28a, 28b in operation, and the voltage difference across the gap 32.

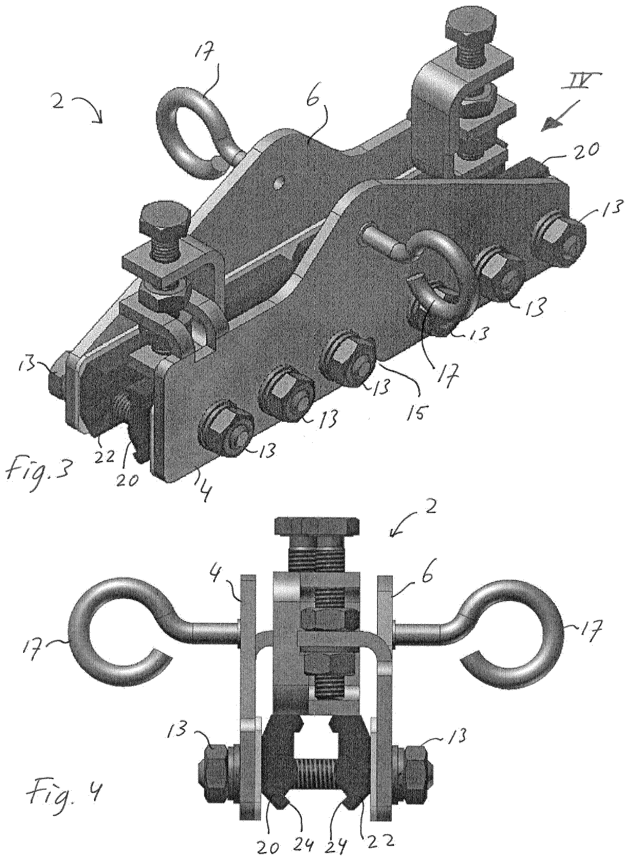

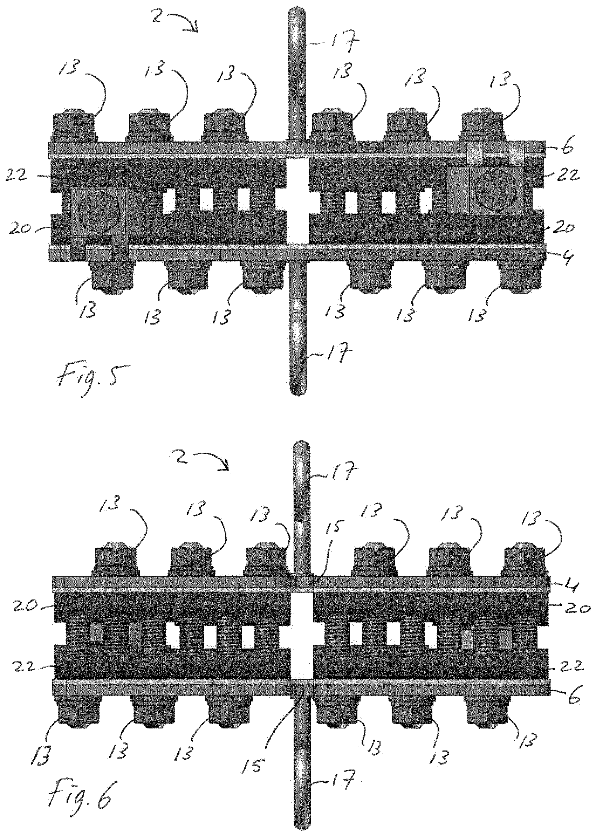

Figures 3, 4, 5 and 6 show a further embodiment of the connector of the invention. The same or similar parts as explained above in relation to the embodiment of Figures 1, 2 carry the same reference symbols.

As can be seen in Figures 3-6, plates 4, 6 are engaged by threaded bars provided with nuts 13. Furthermore, two hooks 17 connected to respective plates 4, 6 are shown to form suspension means.

As explained above, an isolating mechanical connector for connecting sections of an overhead electrical power line comprises first and second clamping members, and securing means for securing the first and second clamping members relative to each other. First clamping areas of the first and second clamping members are opposite to each other to form a first clamping region to accommodate part of a first section of the line. Second clamping areas of the first and second clamping members are opposite to each other to form a second clamping region, spaced from the first clamping region, to accommodate part of a second section of the line. The first and second clamping members comprise electrically isolating material to electrically isolate the first clamping region from the second clamping region. The clamping members provide access to the separation region to allow removing part of the electrical power line in the separation region.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a"/"an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

## Claims

1. An isolating mechanical connector for connecting sections of an overhead electrical power line (28), the connector comprising:
a clamping device (2) comprising a first clamping member (4) and a second clamping member (6) each comprising a plate made at least partially from an electrically isolating material, and securing means for securing the first and second clamping members (4, 6) relative to each other,
the first clamping member (4) and the second clamping member (6) each having a first pressure part (20, 22) forming a first clamping area and a second pressure part (20, 22) forming a second clamping area, wherein the first clamping area of the first clamping member (4) is opposite the first clamping area of the second clamping member (6) to form a first clamping region between the first clamping areas of the first and second clamping members, and wherein the second clamping area of the first clamping member (4) is opposite the second clamping area of the second clamping member (6) to form a second clamping region between the second clamping areas of the first and second clamping members, wherein the plates are generally arranged parallel to each other, and the first and second clamping regions are between the plates, the first clamping region being configured for accommodating part of a first section (28a) of the overhead electrical power line (28), and the second clamping region being configured for accommodating part of a second section (28b) of the overhead electrical power line (28);
the first clamping region and the second clamping region being spaced from each other to form a separation region (11) between the first and second clamping regions; and
the first clamping member (4) and the second clamping member (6) being at least partly made of electrically isolating material so that the first clamping region is electrically isolated from the second clamping region;
wherein the clamping device (2) provides access to the separation region (11).

2. The connector (2) according to claim 1, wherein the first clamping member (4) and the second clamping member (6) each are provided with an opening providing access to the separation region (11).

3. The connector according to claim 1 or 2, wherein the opening of each one of the first and second clamping members (4, 6) is a recess (15) extending from a side of the plate.

4. The connector according to any of the preceding claims, wherein the first and second pressure parts (20, 22) are made from metal, in particular a copper alloy.

5. The connector according to any of the preceding claims, wherein the securing means comprise at least partially threaded elements, bolts (10) and/or nuts to connect the first and second clamping members (4, 6) to each other.

6. The connector according to any of the preceding claims, wherein the clamping members (4, 6) each comprise suspension means (14).

7. A method of providing sections (28a, 28b) of an overhead electrical power line (28) isolated from each other, the method comprising the steps of:
selecting a location on an existing electrical power line (28) where to provide an isolation between sections (28a, 28b) of the electrical power line (28);
mounting the connector according to any of the preceding claims on the existing electrical power line (28), wherein the first clamping areas and the second clamping areas clamp the electrical power line (28); and
removing part of the electrical power line (28) in the separation region (11).

## Patentansprüche

1. Isolierender mechanischer Verbinder zum Verbinden von Abschnitten von einer Überlandleitung (28), wobei der Verbinder das Folgende umfasst:
eine Klemmvorrichtung (2), umfassend ein erstes Klemmelement (4) und ein zweites Klemmelement (6), wobei jedes eine Platte umfasst, die zumindest teilweise aus einem elektrisch isolierenden Material hergestellt ist, und Sicherungsmittel zum Sichern von dem ersten und zweiten Klemmelement (4, 6) relativ zueinander,
wobei das erste Klemmelement (4) und das zweite Klemmelement (6) jeweils einen ersten Druckteil (20, 22), der einen ersten Klemmbereich bildet, und einen zweiten Druckteil (20, 22), der eine zweiten Klemmbereich bildet, aufweist, wobei der erste Klemmbereich von dem ersten Klemmelement (4) dem ersten Klemmbereich von dem zweiten Klemmelement (6) gegenüberliegt, um eine erste Klemmregion zwischen den ersten Klemmbereichen von dem ersten und zweiten Klemmelement zu bilden, und wobei der zweite Klemmbereich von dem ersten Klemmelement (4) dem zweiten Klemmbereich von dem zweiten Klemmelement (6) gegenüberliegt, um eine zweite Klemmregion zwischen den zweiten Klemmbereichen von dem ersten und zweiten Klemmelement zu bilden, wobei die Platten im Allgemeinen parallel zueinander angeordnet sind, und wobei sich die erste und zweite Klemmregion zwischen den Platten befinden, wobei die erste Klemmregion konfiguriert ist, um einen Teil von einem ersten Abschnitt (28a) von der Überlandleitung (28) unterzubringen, und die zweite Klemmregion konfiguriert ist, um einen zweiten Abschnitt (28b) von Überlandleitung (28) unterzubringen;
wobei die erste Klemmregion und die zweite Klemmregion zueinander in einem Abstand angeordnet sind, um eine Trennregion (11) zwischen der ersten und der zweiten Klemmregion zu bilden; und
wobei das erste Klemmelement (4) und das zweite Klemmelement (6) zumindest teilweise aus einem elektrisch isolierenden Material hergestellt sind, so dass die erste Klemmregion von der zweiten Klemmregion elektrisch isoliert ist;
wobei die Klemmvorrichtung (2) einen Zugang zu der Trennregion (11) bereitstellt.

2. Verbinder (2) nach Anspruch 1, wobei das erste Klemmelement (4) und das zweite Klemmelement (6) jeweils mit einer Öffnung ausgestattet sind, die einen Zugang zu der Trennregion (11) bereitstellt.

3. Verbinder nach Anspruch 1 oder 2, wobei die Öffnung von jeweils einem von der ersten und zweiten Klemmelement (4, 6) eine Aussparung (15) ist, die sich von einer Seite der Platte aus erstreckt.

4. Verbinder nach einem der vorhergehenden Ansprüche, wobei der erste und der zweite Druckteil (20, 22) aus einem Metall hergestellt ist, insbesondere aus einer Kupferlegierung.

5. Verbinder nach einem der vorhergehenden Ansprüche, wobei die Sicherungsmittel zumindest teilweise Schraubelemente, Bolzen (10) und/oder Muttern umfassen, um das erste und das zweite Klemmelement (4, 6) miteinander zu verbinden.

6. Verbinder nach einem der vorhergehenden Ansprüche, wobei die Klemmelemente (4, 6) jeweils Aufhängungsmittel (14) umfassen.

7. Verfahren zum Bereitstellen von Abschnitten (28a, 28b) von einer Überlandleitung (28), die zueinander isoliert sind, wobei das Verfahren die folgenden Schritte umfasst:
Auswählen von einem Ort an einer bestehenden Überlandleitung (28), an dem eine Isolierung zwischen Abschnitten (28a, 28b) der Überlandleitung (28) bereitgestellt werden soll;
Anbringen von dem Verbinder nach einem der vorhergehenden Ansprüche an der bestehenden Überlandleitung (28), wobei die ersten Klemmbereiche und die zweiten Klemmbereiche die Überlandleitung (28) einklemmen; und
Entfernen von einem Teil der Überlandleitung (28) in der Trennregion (11).

## Revendications

1. Connecteur mécanique isolant pour connecter des sections d'une ligne d'alimentation électrique (28) aérienne, le connecteur comprenant:
un dispositif de serrage (2) comprenant un premier élément de serrage (4) et un second élément de serrage (6), chacun comprenant une plaque constituée au moins en partie d'un matériau électriquement isolant, et des moyens de fixation pour fixer les premier et second éléments de serrage (4, 6) l'un par rapport à l'autre,
le premier élément de serrage (4) et le second élément de serrage (6) ayant chacun un premier élément de pression (20, 22) formant une première zone de serrage et un second élément de pression (20, 22) formant une seconde zone de serrage, dans lequel la première zone de serrage du premier élément de serrage (4) est opposée à la première zone de serrage du second élément de serrage (6) pour former une première région de serrage entre les premières zones de serrage des premier et second éléments de serrage, et dans lequel la seconde zone de serrage du premier élément de serrage (4) est opposée à la seconde zone de serrage du second élément de serrage (6) pour former une seconde région de serrage entre les secondes zones de serrage des premier et second éléments de serrage, dans lequel les plaques sont arrangées sensiblement parallèles l'une par rapport à l'autre, et les première et seconde régions de serrage sont entre les plaques, la première région de serrage étant configurée pour recevoir une partie d'une première section (28a) de la ligne d'alimentation électrique (28) aérienne, et la seconde région de serrage étant configurée pour recevoir une partie d'une seconde section (28b) de la ligne d'alimentation électrique (28) aérienne;
la première région de serrage et la seconde région de serrage étant espacées l'une de l'autre pour former une région de séparation (11) entre les première et seconde régions de serrage; et
le premier élément de serrage (4) et le second élément de serrage (6) étant au moins en partie constitués d'un matériau électriquement isolant de sorte que la première région de serrage est électriquement isolée de la seconde région de serrage;
dans lequel le dispositif de serrage (2) fournit un accès à la région de séparation (11).

2. Le connecteur (2) selon la revendication 1, dans lequel le premier élément de serrage (4) et le second élément de serrage (6) sont chacun pourvus d'une ouverture donnant accès à la région de séparation (11).

3. Le connecteur selon la revendication 1 ou la revendication 2, dans lequel l'ouverture de chacun des premier et second éléments de serrage (4, 6) est une cavité s'étendant à partir d'un côté de la plaque.

4. Le connecteur selon l'une quelconque des revendications précédentes, dans lequel les premier et second éléments de pression (20, 22) sont constitués de métal, en particulier d'un alliage de cuivre.

5. Le connecteur selon l'une quelconque des revendications précédentes, dans lequel les moyens de fixation comprennent des éléments au moins partiellement filetés, des boulons (10) et/ou des écrous pour connecter les premier et second éléments de serrage (4, 6) l'un à l'autre.

6. Le connecteur selon l'une quelconque des revendications précédentes, dans lequel les éléments de serrage (4, 6) comprennent chacun des moyens de suspension (14).

7. Procédé de fourniture de sections (28a, 28b) d'une ligne d'alimentation électrique (28) aérienne isolées les unes des autres, le procédé comprenant les étapes de:
sélectionner un emplacement sur une ligne d'alimentation électrique (28) existante où pourvoir une isolation entre des sections (28a, 28b) de la ligne d'alimentation électrique (28) ;
monter le connecteur selon l'une quelconque des revendications précédentes sur la ligne d'alimentation électrique (28) existante, dans lequel les premières zones de serrage et les secondes zones de serrage serrent la ligne d'alimentation électrique (28); et
retirer une partie de la ligne d'alimentation électrique (28) dans la région de séparation (11).
